(19) Europäisches Patentamt / European Patent Office / Office européen des brevets

(11) **EP 4 696 834 A1**

(12) **EUROPEAN PATENT APPLICATION**
published in accordance with Art. 153(4) EPC

(43) Date of publication:
**18.02.2026 Bulletin 2026/08**

(21) Application number: **25720951.0**

(22) Date of filing: **06.01.2025**

(51) International Patent Classification (IPC):
*D07B 1/02* (2006.01)   *B60C 9/00* (2006.01)
*B60C 9/28* (2006.01)

(86) International application number:
**PCT/KR2025/000213**

(87) International publication number:
**WO 2025/263718 (26.12.2025 Gazette 2025/52)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **19.06.2024 KR 20240079266**

(71) Applicant: **HS Hyosung Advanced Materials Corporation**
**Seoul 04144 (KR)**

(72) Inventors:
• **AN, Byung Jun**
  **Seoul 04632 (KR)**
• **LEE, Kyoungha**
  **Anyang-si, Gyeonggi-do 14121 (KR)**
• **KIM, Cheol**
  **Seongnam-si, Gyeonggi-do 13616 (KR)**
• **PARK, Jin-Kyung**
  **Yongin-si, Gyeonggi-do 16807 (KR)**

(74) Representative: **Westphal, Mussgnug & Partner Patentanwälte mbB**
**Am Riettor 5**
**78048 Villingen-Schwenningen (DE)**

(54) **HYBRID CORD AND MANUFACTURING METHOD THEREOF**

(57) The present invention resolves the unevenness caused by the difference in fineness of two different yarns by pre-ply twisting a low-modulus first yarn, thereby reducing the modulus difference in the twist index between the low-modulus first yarn and the high-modulus second yarn, thereby ensuring functional uniformity, and discloses a hybrid cord and a method for preparing the same which has not only high Breaking Strength but also strong adhesion to rubber and excellent fatigue resistance properties, thereby enabling high performance and lightweight tires to be realized.

FIG. 1

S-S Curve

....... Comparative example 1
— — Comparative example 2
—— Example 1

EP 4 696 834 A1

**Description**

## TECHNICAL FIELD

The present invention relates to a hybrid cord for tire reinforcement and a method of preparing the same, and more specifically, to a hybrid cord having a high Breaking Strength utilization rate and thus suitable for application to the cap ply of high-performance tires or electric vehicle tires, and a method for preparing the same.

## BACKGROUND ART

As vehicle performance increases, the number of vehicles traveling at speeds exceeding 120 km/h is increasing, and tire cords that can maintain steering stability and durability even during high-speed driving are required.

Tire cord is a fiber cord used as a reinforcing material in tires. It is classified according to the part and role used inside the tire. The tire is composed of a carcass part that supports the entire tire, a belt part that secures the contact area and acts as a frame, and a cap ply part that prevents deformation of the belt part. As the driving speed of the vehicle increases, the belt part of the tire is deformed, causing problems such as reduced ride comfort, and thus the importance of the cap ply for preventing deformation of the belt part is increasing.

Nylon cord and nylon/aramid hybrid cord are mainly used as tire cords for cap ply. Compared to nylon cord, nylon/aramid hybrid cord can be expected to have improved properties such as high Breaking Strength and excellent fatigue resistance due to the inclusion of aramid having a higher modulus than nylon. However, since the fineness of the aramid yarn and the nylon yarn constituting the nylon/aramid hybrid cord are different, when made into a balanced cord with the same twist number, the expected characteristics of a hybrid code cannot be achieved 100%, and uniform physical properties and high fatigue resistance cannot be achieved. In other words, when an external force is applied, not all yarns act simultaneously, but certain yarns resist first, resulting in a problem in which the final properties are lowered. Therefore, in the case of hybrid cord, in order to have high fatigue resistance and uniform properties, it is advantageous to make the hybrid cord with an unbalanced structure in which the twist numbers are different. The existing hybrid cord with an unbalanced structure was made using a ring twister, but the hybrid cord produced by the ring twister has a problem of low Breaking Strength utilization rate due to high friction caused by the anti-ballooning ring and long yarn passage.

To solve these problems, a direct cabler must be used, which can increase the Breaking Strength utilization rate of hybrid cords must be used. However, since cable twisting and ply twisting are performed simultaneously in a direct cabler, the numbers of twists of ply twisting of each ply cannot be made to differ during the twisting process, which has the limitation of not being able to produce a tire cord with an unbalanced structure.

[Prior art literature]

[Patent Document]

(Patent Document 1) US 09653571 A

## DISCLOSURE OF THE INVENTION

## TECHNICAL PROBLEM

The present invention is intended to overcome the problems of the above-described prior art, and one object of the present invention is to provide a hybrid cord capable of achieving high performance of a tire by having not only high Breaking Strength and high modulus but also excellent fatigue resistance.

Another object of the present invention is to provide a method of preparing a hybrid cord capable of realizing high performance of a tire by having high Breaking Strength and excellent fatigue resistance.

## TECHNICAL SOLUTION

An exemplary aspect of the present invention for solving the problem described above relates to a hybrid cord in which a pre-ply twisted low modulus first yarn and a non-pre-ply twisted high modulus second yarn having a higher modulus than the first yarn are simultaneously ply twisted and cable twisted together, wherein a ratio ($K1/K2$) of a first twist index ($K1$) calculated by the following formula 1 to a second twist index ($K2$) calculated by the following formula 2 is 0.94 to 1.24, and a Breaking Strength utilization rate of the hybrid cord is 70% or more:

[Formula 1]

$$K1=(T1+T2)/10 \times A^{0.5}$$

T1: Ply twist number of the first yarn
T2: Pre-ply twist number of the first yarn
A: Denier of the first yarn

[Formula 2]

$$K2=T3/10 \times B^{0.5}$$

T3: Ply twist number of the second yarn
B: Denier of the second yarn.

The pre-ply twist number of the first yarn may be 3 to 25% of ply twist number of the second ply twisted yarn.

The twist number of the first yarn and the second yarn during the ply twisting and cable twisting may be in the range of 200 to 500 TPM.

The first yarn may have a fineness of 800 to 1700 denier, and the second yarn may have a fineness of 1000 to 2000 denier.

The first yarn may be a nylon yarn, and the second yarn may be an aramid yarn.

Another exemplary aspect of the present invention for achieving the above-described object relates to a tire comprising a pair of parallel bead cores, at least one radial carcass ply which is wound around the bead core, at least one belt layer laminated on an outer circumference of the at least one radial carcass ply, and at least one cap ply layer laminated on an outer circumference of the belt layer in a tire circumferential direction, wherein the cap ply comprises the hybrid cord described above.

Another aspect of the present invention relates to a method of preparing a hybrid cord comprising the steps of:

preparing two or more types of yarns having different modulus, wherein the modulus of the first yarn is smaller than the modulus of the second yarn;

pre-ply twisting the first yarn;
producing a plied yarn by simultaneously performing ply twisting and cable twisting on a pre-ply twisted first yarn and a non-pre-ply twisted second yarn; and
producing a dip cord by immersing the plied yarn in an adhesive solution, and then drying and heat-treating the plied yarn, and

wherein a ratio (K1/K2) of a first twist index (K1) calculated by the following formula 1 and a second twist index (K2) calculated by the following formula 2 is 0.94 to 1.24.

[Formula 1]

$$K1=(T1+T2)/10 \times A^{0.5}$$

T1: Ply twist number of the first yarn
T2: Pre-ply twist number of the first yarn
A: Denier of the first yarn

[Formula 2]

$$K2=T3/10 \times B^{0.5}$$

T3: Ply twist number of the second yarn
B: Denier of the second yarn.

In the present invention, the pre-ply twisting of the first yarn is performed in a first twist direction, the ply twisting of the first yarn performed in a second twist direction, and the ply twisting of the second yarn is performed in a third twist direction. The second twist direction and the third twist direction may be the same or different directions as the first twist direction.

The cable twisting of the first yarn and the second yarn is performed in a fourth twist direction, and the fourth twist direction may be a direction opposite to the second twist direction and the third twist direction.

It is preferable that the pre-ply twist number of the first yarn is 3 to 25% of ply twist number of the second ply twisted yarn.

The first yarn may be a nylon yarn, and The second yarn may be an aramid yarn.

## ADVANTAGEOUS EFFECTS

According to the present invention, since the process of forming a first ply twisted yarn and a second ply twisted yarn (i.e., a ply twisting process) and the process of forming a plied yarn from the first ply twisted yarn and the second ply twisted yarn (i.e., a cable twisting process) are performed by a single twister (e.g., a direct cabler), the productivity of the hybrid cord is improved and the manufacturing cost is reduced, while a hybrid cord having an unbalanced structure can be produced by a direct cabler, thereby improving the Breaking Strength, adhesiveness, and Breaking Strength utilization rate of the hybrid cord.

In the present invention, structural unevenness caused by the difference in fineness of two different yarns is resolved by pre-ply twisting a first yarn having a low modulus before the ply twisting and the cable twisting, thereby reducing the difference in twist index between the first yarn and the second yarn, thereby obtaining a hybrid cord having higher Breaking Strength and improved fatigue resistance that is functionally more balanced.

## DESCRIPTION OF DRAWINGS

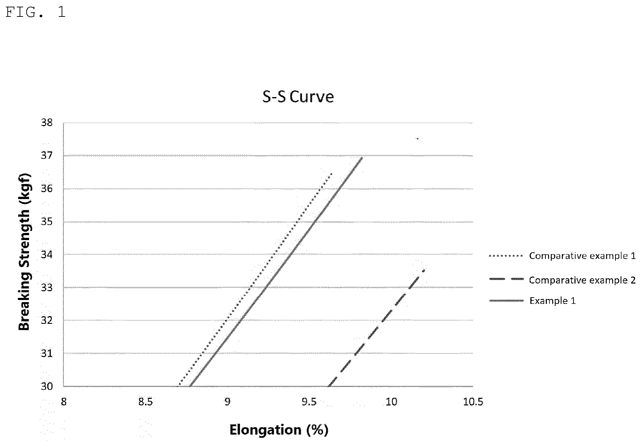

Figure 1 is a force-strain curve (S-S curve) for the hybrid cord obtained in Example 1 and Comparative Examples 1 and 2.

## MODE FOR CARRYING OUT THE INVENTION

The present invention is described in more detail below.

As used herein, the term "cord" may refer to a hybrid cord comprising two or more different heterogeneous fibers, and may also encompass a dipped cord coated with a coating agent such as an adhesive or the like.

As used herein, 'pre-ply twisting' means imparting a predetermined twist to the yarn before ply twisting and cable twisting to prepare a plied yarn.

As used herein, 'ply twisting' means twisting yarns or filaments in one direction, and ' ply twisted yarn' may mean a single ply of a yarn, i.e., a single yarn, made by twisting yarns or filaments in one direction. A first ply twisted yarn is a first yarn obtained by ply twisting the pre-ply twisted first yarn, and a second ply twisted yarn is a second yarn obtained by ply twisting a second yarn that has not been pre-ply twisted.

As used herein, the 'ply twist number of the first yarn' means the ply twist number of the first ply twisted yarn excluding the pre-ply twist number.

As used herein, 'cable twisting' means twisting the first ply twisted yarn and the second ply twisted yarn in one direction to produce a plied yarn (raw cord).

As used herein, the term "plied yarn" means a yarn made by cable twisting two or more ply twisted yarns together in one direction, and is also called "raw cord".

As used herein, 'cord' means a coated plied yarn containing an adhesive coat so that it may be directly applied to a rubber product, and is also called a 'dip cord'. The term 'cord' also includes a fabric containing an adhesive obtained by weaving plied yarns to form a fabric and then dipping the fabric in an adhesive solution.

As used herein, the "twist number" means the number of twist per meter, and its unit may be TPM (Twist Per Meter). In the present invention, the twist number may be measured using a method specified in ASTM D-885, for example, a D314 device manufactured by Zweigle.

One exemplary aspect of the present invention relates to a hybrid cord comprising a hybrid cord in which a pre-ply twisted low modulus first yarn and a non-pre-ply twisted high modulus second yarn having higher modulus compared to the first yarn which are simultaneously ply twisted and cable twisted together, and the hybrid cord has an unbalanced structure.

The present invention may overcome the functional disadvantage caused by the difference in denier of two different yarns having different modulus by pre-ply twisting a low modulus yarn, and may improve the Breaking Strength, fatigue resistance, and adhesive strength of the hybrid cord. In addition, the present invention may improve the Breaking Strength utilization rate of a hybrid cord by pre-ply twisting a low modulus first yarn (e.g., nylon yarn) and then ply twisting and cable twisting the pre-ply twisted first yarn and the non-pre-ply twisted second yarn to form an unbalanced structure by using a direct cabler.

In the present invention, the first yarn and the second yarn have different modulus, and the first yarn has a smaller modulus than the modulus of the second yarn.

The first yarn having low modulus may be a nylon filament. Usable nylon filaments include one filament selected from the group consisting of nylon 6, nylon 66, nylon 6.10, nylon 5,6 and nylon 4,10, and preferably nylon 66.

The second yarn having a relatively high modulus may be selected from the group consisting of aramid, aromatic polyamide, wholly aromatic polyester, and mixtures thereof. According to a preferred embodiment of the present invention, the second yarn is poly(p-phenylene terephthalamide). Aramid yarn having a high modulus is an advantageous material for suppressing the flat spot phenomenon that causes tire deformation because the amount of change in modulus at room temperature and high temperature is small.

In one embodiment, the first yarn may be a nylon yarn having a fineness of 800 to 1700 denier, and the second yarn may be an aramid yarn having a fineness of 1000 to 2000 denier. For example, the fineness of the aramid yarn may be 1000 denier, 1500 denier, or 2000 denier, and the fineness of the nylon yarn may be 840 deniers, 1260 denier, or 1680 denier.

In one embodiment, the hybrid cord according to the present invention is a hybrid cord of a first yarn and a second yarn. The pre-ply twisted first yarn and the non-pre-ply twisted second yarn are simultaneously ply twisted using a single twisting machine (for example, a direct cabler) in order to form first ply twisted yarn and second ply twisted yarn, and at the same time, the first ply twisted yarn and the second ply twisted yarn are cable twisted together to form a plied yarn (raw cord).

In the present invention, the twist number means the twist number at a corresponding stage regardless of the twist direction. Since the first ply twisted yarn is a yarn that is first pre-ply twisted and then ply twisted again, the twist number of the first ply twisted yarn and the second ply twisted yarn obtained at the twist stage are not the same depending on the twist direction. However, limited to the ply twisting stage, the twist number of the first yarn (the twist number of the first ply twisted yarn) and the twist number of the second ply twisted yarn may be made the same.

The twist direction of the pre-ply twisting of the first yarn and the twist directions of the first ply twisted yarn and the second ply twisted yarn may be the same or different. The first ply twisted yarn and the second ply twisted yarn have the same twist direction, and the twist direction of the cable twisting may be opposite to the twist directions of the ply twisting of the first ply twisted yarn and the second ply twisted yarn.

The first twist index (K1) of the first ply twisted yarn is calculated by the following Formula 1, and the second twist index (K2) of the second ply twisted yarn is calculated by the following Formula 2. The ratio (K1/K2) of the first twist index (K1) to the second twist index (K2) may be in the range of 0.94 to 1.24. If the ratio (K1/K2) of the first twist index (K1) to the second twist index (K2) is less than 0.94, a functional imbalance occurs in the hybrid cord, making it difficult to achieve the object of the present invention, and if the ratio (K1/K2) of the first twist index (K1) to the second twist index (K2) exceeds 1.24, the degree of unevenness between the two yarns increases in the twisting stage, which may deteriorate workability of a hybrid cord. In one embodiment, the first twist index (K1) calculated by the following Formula 1 of the first ply twisted yarn and the second twist index (K2) calculated by the following Formula 2 of the second ply twisted yarn may be 1070-1450, respectively.

$$[Formula\ 1]$$

$$K1=(T1+T2)/10 \times A^{0.5}$$

T1: Ply twist number of the first yarn
T2: Pre-ply twist number of the first yarn
A: Denier of the first yarn

$$[Formula\ 2]$$

$$K2=T3/10 \times B^{0.5}$$

T3: Ply twist number of the second yarn
B: Denier of the second yarn.

The pre-ply twist number of the first yarn may be 3 to 25% of ply twist number of the second ply twisted yarn. The twist directions of the pre-ply twisting and ply twisting may be the same. However, the present invention is not limited thereto, and may be different. For example, if a first yarn (e.g., nylon yarn) is pre-ply twisted at 50 TPM in the Z direction, and then the pre-ply twisted nylon yarn is placed on a creel of a direct cabler and an aramid yarn is put into a POT and ply and cable twisted at 300 TPM, a hybrid raw cord composed of nylon yarns and aramid yarns having different total twist number may be produced. 300 TPM for the ply twisted aramid, and 350 TPM for the ply twisted nylon (the sum of the pre-ply twist number and ply twist number) is obtained.

For example, the pre-ply twisted first yarn may include nylon fibers (filaments) having a fineness of 800 to 1700 denier (de). For example, the lower limit of the fineness of the first yarn may be 800 denier or more, 900 denier or more, 1000 denier or more, 1050 denier or more, 1100 denier or more, 1150 denier or more, 1200 denier or more, 1250 denier or more, 1300 denier or more, 1350 denier or more, or 1400 denier or more, 1500 denier or more. And, the upper limit of the fineness of the first yarn may be, for example, 1700 denier or less, 1650 denier or less, 1600 denier or less, 1550 denier or less, 1500 denier or less, 1450 denier or less, 1400 denier or less, 1350 denier or less, 1300 denier or less, 1250 denier or less, 1200 denier or less, 1150 denier or less, 1100 denier or less, or 1050 denier or less, 1000 denier, 900 denier or less. In a preferred embodiment, the fineness of the first yarn may be 840 deniers, 1260 denier or 1680 denier.

The second yarn may include fibers (filaments) having a fineness of 1000 to 2000 denier. For example, the lower limit of the fineness of the second yarn may be 1000 denier or more, 1100 denier or more, 1200 denier or more, 1300 denier or more, 1400 denier or more, 1450 denier or more, 1500 denier or more, 1550 denier or more, 1600 denier or more, or 1650 denier or more, 1700 denier or more, 1750 denier or more, 1800 denier or more, or 1900 denier or more. And, the upper limit of the fineness of the second yarn may be, for example, 2000 denier or less, 1900 denier or less, 1800 denier or less, 1700 denier or less, 1650 denier or less, 1600 denier or less, 1550 denier or less, 1500 denier or less, or 1450 denier or less. In a preferred embodiment, the fineness of the second yarn may be 1000 denier, 1500 denier, or 2000 denier.

According to the present invention, since the aramid yarn and the nylon yarn have substantially the same twist index and length within the final hybrid cord, the yarns exhibit similar behavior in terms of Breaking Strength and fatigue performance.

Specifically, the twist number of the first ply twisted nylon yarn may be 200 to 500 TPM. According to the present invention, when performing ply twisting and cable twisting for producing the above-described plied yarn (raw cord), the same twist number is applied within the range of 200 to 500 TPM. However, when performing subsequent dipping, drying, and heat treatment processes for adhesive coating sequentially, unintended untwist may occur, resulting in a difference of less than 15% compared to the initially set twist number in ply twisting and cable twisting, respectively. In general, when the twist number of the filament yarn is high, the Breaking Strength decreases but the fatigue performance increases. On the other hand, when the twist number of the filament yarn is low, the Breaking Strength increases but the fatigue performance decreases.

In the present invention, the twist number of the nylon yarn (excluding the pre-ply twist number) and the twist number of the aramid yarn are respectively 200 TPM or more, 210 TPM or more, 220 TPM or more, 230 TPM or more, 240 TPM or more, 250 TPM or more, 260 TPM or more, 270 TPM or more, 280 TPM or more, 290 TPM or more, 300 TPM or more, 310 TPM or more, 320 TPM or more, 330 TPM or more, 340 TPM or more, 350 TPM or more, 360 TPM or more, 370 TPM or more, 380 TPM or more, 390 TPM or more, 400 TPM or more, 410 TPM or more, 420 TPM or more, 430 TPM or more, 440 TPM or more, 450 TPM or more, 460 TPM Ideally, it could be 470 TPM or higher, 480 TPM or higher, or 490 TPM or higher.

And, the upper limit of ply twist number of the nylon yarn (excluding the pre-ply twist number) and the aramid yarn is, for example, 500 TPM or less, 490 TPM or less, 480 TPM or less, 470 TPM or less, 460 TPM or less, 450 TPM or less, 440 TPM or less, 430 TPM or less, 420 TPM or less, 410 TPM or less, 400 TPM or less, 390 TPM or less, 380 TPM or less, 370 TPM or less, 360 TPM or less, 350 TPM or less, 340 TPM or less, 330 TPM or less, 320 TPM or less, 310 TPM or less, 300 TPM or less, 290 TPM or less, 280 TPM or less, 270 TPM or less, 260 TPM or 250 TPM or less, 240 It may be less than TPM, or less than 230 TPM.

As described above, the hybrid cord of the present invention includes a first ply twisted yarn and a second ply twisted yarn that are twisted together and have a predetermined twist number, and is formed by twisting the first ply twisted yarn and the second ply twisted yarn together. At this time, since the first yarn for forming the first ply twisted yarn and the second yarn for forming the second ply twisted yarn are simultaneously ply twisted by a direct cabler, respectively, to form the first ply twisted yarn and the second ply twisted yarn, the twist direction (second twist direction) of the first ply twisted yarn and the twist direction (third twist direction) of the second ply twisted yarn may be the same. In addition, when a direct cabler, such as Cable Corder made by Allma Company is used, the cable twisting may be performed simultaneously with the ply twisting following the ply twisting, and the twist direction of the cable twisting (i.e., the fourth twist direction) may be opposite to the second twist direction (or the third twist direction).

The hybrid cord according to one embodiment of the present invention may further include an adhesive coating layer on the nylon yarn and the aramid yarn to improve adhesion to the tire. The coating layer may be formed on at least a portion of the ply twisted yarn. The method for forming the coating layer is not particularly limited, and for example, the coating layer may be formed through a known dipping or spraying method.

The coating layer may be formed from an adhesive solution. For example, the adhesive solution may be, but not limited to, resorcinol formaldehyde latex (RFL) adhesive solution or epoxy-based adhesive solution or urethane-based adhesive solution.

The hybrid cord of the present invention has a dry heat shrinkage of 1.0 to 3.0%. If the dry heat shrinkage exceeds the above range, the cord may shrink significantly due to an increase in the temperature inside the tire during high-speed driving, thereby lowering the dimensional stability of the hybrid cord and thus deteriorating the performance of a tire.

The dry heat shrinkage of the hybrid cord of the present invention may be 1.0% or greater. For example, the dry heat shrinkage may be 1.1% or greater, 1.2% or greater, 1.3% or greater, 1.4% or greater, 1.5% or greater, 1.6% or greater, 1.7% or greater, 1.8% or greater, 1.9% or greater, or 2.0% or greater. The dry heat shrinkage of the hybrid cord may be 3.0% or less. For example, the dry heat shrinkage may be 2.9% or less, 2.8% or less, 2.7% or less, 2.6% or less, 2.5% or less, 2.4% or less, 2.3% or less, or 2.2% or less.

The Breaking Strength of the hybrid cord of the present invention may be 35 kgf or more. Specifically, the Breaking Strength may be, for example, 35 kgf or more, 36 kgf or more, 37 kgf or more, 38 kgf or more, 39 kgf or more, or 40 kgf or more.

In the present invention, the Breaking Strength utilization rate of the hybrid plied yarn (raw cord) is 70% or more, and more preferably 75% or more. The Breaking Strength utilization rate of the hybrid cord may be 70% or more. For example, the Breaking Strength utilization rate of the hybrid cord may be 71.0% or more, 72.0% or more, 73.0% or more, 74% or more, 75% or more, 76% or more, 77% or more, 78% or more, 79% or more, or 80% or more.

Below, the method of preparing the hybrid cord of the present invention is described in more detail.

When preparing a hybrid cord by the present invention, two or more kinds of yarns having different modulus, where the modulus of the first yarn is smaller than that of the second yarn, are prepared. Then, the first yarn is pre-ply twisted, and then the pre-ply twisted first yarn and the non-pre-ply twisted second yarn are simultaneously subjected to ply twisting and cable twisting to obtain a plied yarn. Optionally, the step of immersing the plied yarn in an adhesive solution and performing drying and heat treatment may be further included.

In the method of the present invention, the ratio (K1/K2) of a first twist index (K1) calculated by the following Formula 1 to a second twist index (K2) calculated by the following Formula 2 may be 0.94 to 1.24.

[Formula 1]

$$K1=(T1+T2)/10×A^{0.5}$$

T1: Ply twist number of the first yarn
T2: Pre-ply twist number of the first yarn
A: Denier of the first yarn

[Formula 2]

$$K2=T3/10×B^{0.5}$$

T3: Ply twist number of the second yarn
B: Denier of the second yarn.

The first yarn may be a nylon yarn, and the second yarn may be an aramid yarn. For example, nylon filaments are pre-ply twisted, and then the pre-ply twisted nylon filaments and non-pre-ply twisted aramid filaments are simultaneously ply twisted using a single twisting machine (for example, a direct cabler, such as Cable Corder made by Allma Company) in order to form nylon ply twisted yarn and aramid ply twisted yarn, and at the same time, the nylon ply twisted yarn and the aramid ply twisted yarn are cable twisted together, whereby plied yarn, which is a raw cord, is formed.

In the case of twisting a first yarn (e.g., nylon yarn) having a low modulus, the twist direction may be in the S direction or the Z direction. The pre-ply twist number of the first yarn may be 3 to 25% of ply twist number of the second ply twisted yarn (e.g., aramid yarn).

For example, the first yarn having a low modulus is pre-ply twisted with a twist number of 3 to 25% of ply twist number of the second ply twisted yarn. Next, the first yarn having a denier of 800 to 1700 and the second yarn having a denier of 1000 to 2000 are fed to a direct cabler (for example. Cable Corder) which performs both ply twisting and cable twisting. In the direct cabler, the step of ply twisting the first yarn to obtain a first ply twisted yarn and the step of ply twisting the second yarn to obtain a second ply twisted yarn are performed simultaneously. The step of cable twisting the first ply twisted yarn and the second ply twisted yarn together to form a plied yarn is performed almost simultaneously (continuously) with the ply twisting steps of the first and second yarns. The twist direction of the cable twisting is opposite to the twist direction of the ply twisting, and when the ply twisting and cable twisting are performed simultaneously, the same twist number may be applied within the range of 200 to 500 TPM.

In the present invention, after preparing a plied yarn (raw cord), a hybrid cord (i.e., dip cord) of the present invention may be made by immersing the plied yarn in an adhesive solution, drying the plied yarn impregnated with the adhesive solution, and then heat-treating the dried plied yarn. At this time, a Resorcinol Formaldehyde Latex (RFL) solution or an epoxy-based adhesive solution or urethane-based adhesive solution may be used as the adhesive solution.

The temperature and time of the above drying process may vary depending on the composition of the adhesive solution, but the drying process is typically performed at 70 to 200°C for 30 to 120 seconds. The heat treatment process may be performed at 200 to 250°C for 30 to 120 seconds. Through the above processes, the adhesive component of the adhesive solution is coated on the surface of the plied yarn, thereby increasing the adhesion between the hybrid cord of the present invention and other components of the tire.

Meanwhile, although the twisting machine is set to perform the ply and cable twisting with the same twist number, the untwist phenomenon may occur during the process in which the plied yarn prepared by the twisting machine is immersed in the adhesive solution and then dried and heat-treated. In order to minimize this untwist phenomenon and prevent excessive shrinkage of the nylon yarn, it is preferable that the tension applied to the plied yarn in the immersion, drying, and heat-treatment steps performed sequentially be 0.4 kg/cord or more.

Another aspect of the present invention relates to a tire comprising a pair of parallel bead cores, at least one radial carcass ply which is wound around the bead core, at least one inclined belt layer laminated on an outer circumference of the at least one radial carcass ply, and at least one cap ply layer laminated on an outer circumference of the inclined belt layer in a tire circumferential direction, wherein the cap ply comprises a hybrid cord (dip cord) described above.

Hereinafter, the present invention will be described in more detail with reference to examples. However, the following examples are provided only to aid understanding of the present invention and do not limit the scope of the present invention.

Examples

Example 1

Before performing a ply twisting and a cable twisting, the 1260d nylon yarn was pre-ply twisted at 30 TPM in the Z direction. Then, the 1500d non-pre-ply twisted aramid yarn and the 1260d pre-ply twisted nylon yarn were fed to a direct cabler (Allma Direct Cabler) and the ply twisting and cable twisting were performed simultaneously to produce a plied yarn. At this time, the twist direction of the ply twisting of the nylon yarn and the aramid yarn was the same in the Z direction, and the twist number was the same as 300 TPM, and the twist direction of the cable twisting was in the S direction, and the twist number was 300 TPM.

Next, the plied yarn was immersed in a resorcinol-formaldehyde-latex (RFL) adhesive solution. The plied yarn impregnated with the RFL adhesive solution was dried at 160°C for 100 seconds and heat-treated at 240°C for 100 seconds to produce a hybrid cord.

Examples 2-3

A hybrid cord was produced in the same manner as in Example 1, except that the pre-ply twist number of the nylon yarn (10 TPM, 50 TPM), ply twist number of the nylon yarn, or the ratio (K1/K2) of the twist index (K1) of the nylon yarn to the twist index (K2) of the aramid yarn were varied as shown in Table 1 below.

Comparative example 1

A hybrid cord was produced in the same manner as Example 1, except that 1260d nylon yarn, which was not pre-ply twisted prior to the ply twisting and the cable twisting, was used.

Comparative Example 2

A hybrid cord was produced in the same manner as in Example 1, except that 1500d aramid yarn and 1260d nylon yarn were fed to a ring twister and subjected to ply twisting (300 TPM/330 TPM) and then to cable twisting (300 TPM).

Comparative Example 3

A hybrid cord was produced in the same manner as in Example 1, except that the nylon yarn was pre-ply twisted with the twist number of 110 TPM before the ply twisting and the cable twisting of the plied yarn.

Test example 1

In order to evaluate whether the properties of the hybrid cords obtained from the above examples and comparative examples are suitable in a cap ply use, the Breaking Strength, fatigue resistance and Breaking Strength utilization rate of the hybrid cords were measured by the following methods, and the results are shown in Table 1 below.

* Breaking Strength (kgf): Ten samples of 250 mm in length were prepared for each hybrid cord. Then, the Breaking Strength of each sample was measured by applying a tensile speed of 300 m/min to each sample using an Instron testing machine (Instron Engineering Corp., Mayton, Mass) according to the ASTM D885/D885M-10a (2014) test method (leaving it in a constant temperature and humidity chamber with a temperature of 25°C and a relative humidity of 65%RH for 24 hours). The Breaking Strength was calculated as the average value of the Breaking Strength of the 10 samples.

* Fatigue Resistance (%): The residual Breaking Strength was measured after the fatigue test using a Belt Fatigue Tester, and the fatigue resistance was compared. The fatigue test conditions were RT, 80 kg of force (load), and 37,500 rotations. After the fatigue test, the rubber and cord were separated and the residual Breaking Strength was measured. The residual Breaking Strength was measured using a conventional tensile Breaking Strength tester.

* Breaking Strength utilization rate (%):

-

Breaking Strength utilization rate of the plied yarn (raw cord) (%) = Breaking Strength of raw cord/ (Breaking Strength of the first yarn + Breaking Strength of the second yarn)×100

-

Breaking Strength utilization rate of the cord(dip cord) (%) = Breaking Strength of dip cord/(Breaking Strength of first yarn + Breaking Strength of second yarn)×100

[Table 1]

|  | Comparative Example 1 | Comparative Example 2 | Comparative Example 3 | Example 1 | Example 2 | Example 3 |
|---|---|---|---|---|---|---|
| Twisting machine | cable corder | ring twister | cable corder | cable corder | cable corder | cable corder |
| Breaking Strength of aramid yarn (kgf) | 37.5 | 37.5 | 37.5 | 37.5 | 37.5 | 37.5 |
| Breaking Strength of nylon yarn (kgf) | 12.5 | 12.5 | 12.5 | 12.5 | 12.5 | 12.5 |
| Pre-ply twist number of nylon yarn (TPM) | 0 | 0 | 110 | 30 | 10 | 50 |
| Ply Twist number of nylon yarn (TPM) | 300 | 330 | 300 | 300 | 300 | 300 |
| Ply Twist number of aramid yarn (TPM) | 300 | 300 | 300 | 300 | 300 | 300 |
| Cable Twist Number (TPM) | 300 | 300 | 300 | 300 | 300 | 300 |
| Twist index of nylon (K1) | 1065 | 1171 | 1455 | 1171 | 1100 | 1242 |
| Twist index of aramid (K2) | 1162 | 1162 | 1162 | 1162 | 1162 | 1162 |
| K1/K2 ratio | 0.92 | 1.01 | 1.25 | 1.01 | 0.95 | 1.07 |

(continued)

| | Comparat ive Example 1 | Comparat ive Example 2 | Comparat ive Example 3 | Example 1 | Example 2 | Example 3 |
|---|---|---|---|---|---|---|
| Breaking Strength of raw cord (kgf) | 42.0 | 38.7 | 41.3 | 42.6 | 42.3 | 42.1 |
| Breaking Strength utilization rate of raw cord (%) | 84.0 | 77.4 | 82.6 | 85.2 | 84.6 | 84.2 |
| Breaking Strength of dip cord (kgf) | 37.1 | 33.7 | 36.3 | 38.1 | 37.8 | 37.3 |
| Breaking Strength utilization rate of dip cord (%) | 74.2 | 67.4 | 72.6 | 76.2 | 75.6 | 74.6 |
| Fatigue resistance (%) | 88 | 91 | 86 | 94 | 92 | 90 |

As shown in the test results in Table 1 above, in the present invention in which pre-ply twisted nylon yarn is pre-ply twisted to have a certain range of twists and pre-ply twisted nylon yarn and non-pre-ply twisted aramid yarn are simultaneously ply and cable twisted using a direct cabler to produce a raw cord (Examples 1 to 4), it may be confirmed that the Breaking Strength, Breaking Strength utilization rate, and fatigue resistance of the hybrid cord are superior to those of the comparative examples. In particular, compared to Comparative Example 1 in which the nylon yarn was not pre-ply twisted, the examples have superior fatigue resistance, and compared to Comparative Example 2 in which a ring twister instead of a direct cabler is used, the examples have superior Breaking Strength utilization rate.

Test Example 2

A 205/65 R15 V tire manufactured by applying the hybrid cord produced in the above examples and comparative examples to a cap ply was mounted on a passenger vehicle of the 2000 cc class. Steering stability and ride comfort were evaluated on a 5-point scale out of 100 by experienced drivers driving the test course, and the results are shown in Table 2 below. Durability was measured according to the P-metric tire endurance test of FMVSS 109. The tire was driven for a total of 34 hours at a temperature of 38°C, 85, 90, and 100% of the tire's marked load, and a driving speed of 80 km/h. If no traces of bead separation, cord cuts, or belt separation were found in any part of the tread, sidewall, carcass cord, inner liner, or bead, it was judged to pass. And uniformity was tested using a high-speed uniformity tester (HISUM (HOFMANN RGM-LT3): high speed uniformity machine) at 300 to 1300 (rpm) while maintaining a constant air pressure (30 psi).

[Table 2]

| Performance of tire | Comparati ve Example 1 | Comparati ve Example 2 | Comparati ve Example 3 | Example 1 | Example 2 | Example 3 |
|---|---|---|---|---|---|---|
| Ride Comfort | 90 | 90 | 90 | 100 | 100 | 95 |
| Steering stability | 90 | 85 | 85 | 100 | 100 | 95 |
| Durability | pass | fail | pass | pass | pass | pass |
| Uniformity | 90 | 80 | 95 | 100 | 98 | 95 |

As confirmed through the results in Table 2 above, the tires, to which the hybrid cord according to Examples 1 to 3 of the present invention was applied to the cap ply, were more effective in terms of ride comfort, durability, and steering stability than the tires of Comparative Examples 1 to 3, to which the conventional hybrid cord was applied, and it can be seen that the uniformity of the tire of the present invention was also improved.

**Claims**

1.   A hybrid cord comprising a pre-ply twisted low modulus first yarn and a non-pre-ply twisted high modulus second yarn having higher modulus compared to the first yarn which are simultaneously ply twisted and cable twisted together, wherein a ratio ($K1/K2$) of a first twist index ($K1$) calculated by the following formula 1 to a second twist index ($K2$)

calculated by the following formula 2 is 0.94 to 1.24, and a Breaking Strength utilization rate of the hybrid cord is 70% or more:

[Formula 1]

$$K1=(T1+T2)/10\times A^{0.5}$$

T1: Ply twist number of the first yarn
T2: Pre-ply twist number of the first yarn
A: Denier of the first yarn

[Formula 2]

$$K2=T3/10\times B^{0.5}$$

T3: Ply twist number of the second yarn
B: Denier of the second yarn.

2. The hybrid cord according to claim 1, wherein the pre-ply twist number of the first yarn is 3 to 25% of ply twist number of the second ply twisted yarn.

3. The hybrid cord according to claim 1, wherein the twist number of the first yarn and the second yarn during the ply twisting and cable twisting is 200 to 500 TPM.

4. The hybrid cord according to claim 1, wherein the first yarn has a fineness of 800 to 1700 denier, and the second yarn has a fineness of 1000 to 2000 denier.

5. The hybrid cord according to claim 1, wherein the first yarn is a nylon yarn and the second yarn is an aramid yarn.

6. A tire comprising a pair of parallel bead cores, at least one radial carcass ply which is wound around the bead core, at least one inclined belt layer laminated on an outer circumference of the at least one radial carcass ply, and at least one cap ply layer laminated on an outer circumference of the inclined belt layer in a tire circumferential direction, wherein the cap ply comprises a hybrid cord according to any one of claims 1 to 5.

7. A method of preparing a hybrid cord, the method comprising:

preparing two or more types of yarns having different modulus, wherein the modulus of the first yarn is smaller than the modulus of the second yarn;
pre-ply twisting the first yarn;
producing a plied yarn by simultaneously performing ply twisting and cable twisting on a pre-ply twisted first yarn and a non-pre-ply twisted second yarn; and
producing a dip cord by immersing the plied yarn in an adhesive solution and then drying and heat-treating the plied yarn; and
wherein a ratio (K1/K2) of a first twist index (K1) calculated by the following formula 1 to a second twist index (K2) calculated by the following formula 2 is 0.94 to 1.24:

[Formula 1]

$$K1=(T1+T2)/10\times A^{0.5}$$

T1: Ply twist number of the first yarn
T2: Pre-ply twist number of the first yarn
A: Denier of the first yarn

[Formula 2]

$$K2=T3/10\times B^{0.5}$$

T3: Ply twist number of the second yarn
B: Denier of the second yarn.

8. The method according to claim 7, wherein the pre-ply twisting of the first yarn is performed in a first twisting direction, the ply twisting of the first yarn is performed in a second twisting direction, the ply twisting of the second yarn is performed in a third twisting direction, and the second twisting direction and the third twisting direction are performed in the same or different direction as the first twisting direction.

9. The method according to claim 8, wherein the cable twisting of the first yarn and the second yarn is performed in the fourth twisting direction, and the fourth twisting direction is in a direction opposite to the second and third twisting directions.

10. The method according to claim 8, wherein the Pre-ply twist number of the first yarn is 3 to 25% of ply twist number of the second ply twisted yarn.

11. The method according to claim 8, wherein the first yarn is a nylon yarn and the second yarn is an aramid yarn.

FIG. 1

S-S Curve

## INTERNATIONAL SEARCH REPORT

| International application No. |
| --- |
| **PCT/KR2025/000213** |

### A. CLASSIFICATION OF SUBJECT MATTER

**D07B 1/02**(2006.01)i; **B60C 9/00**(2006.01)i; **B60C 9/28**(2006.01)i

According to International Patent Classification (IPC) or to both national classification and IPC

### B. FIELDS SEARCHED

Minimum documentation searched (classification system followed by classification symbols)

D07B 1/02(2006.01); B60C 9/00(2006.01); B60C 9/02(2006.01); B60C 9/22(2006.01); D02G 3/04(2006.01); D02G 3/28(2006.01); D02G 3/48(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 하이브리드(hybrid), 아라미드(aramid), 타이어(tire), 나일론(nylon), 꼬임(twist)

### C. DOCUMENTS CONSIDERED TO BE RELEVANT

| Category* | Citation of document, with indication, where appropriate, of the relevant passages | Relevant to claim No. |
| --- | --- | --- |
| A | KR 10-1602605 B1 (KOLON INDUSTRIES, INC.) 21 March 2016 (2016-03-21)<br>See paragraphs [0028], [0041], [0047], [0051] and [0058]. | 1-11 |
| A | KR 10-2014-0090307 A (KOLON INDUSTRIES, INC.) 17 July 2014 (2014-07-17)<br>See paragraph [0046]. | 1-11 |
| A | KR 10-2018-0063922 A (HYOSUNG CORPORATION) 14 June 2018 (2018-06-14)<br>See paragraph [0020]. | 1-11 |
| A | JP 7477531 B2 (BRIDGESTONE CORP.) 01 May 2024 (2024-05-01)<br>See paragraph [0028]. | 1-11 |
| A | KR 10-2022-0149436 A (KOLON INDUSTRIES, INC.) 08 November 2022 (2022-11-08)<br>See claims 1-4. | 1-11 |

☐ Further documents are listed in the continuation of Box C.    ☑ See patent family annex.

| | |
| --- | --- |
| * Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
| --- | --- |
| **08 April 2025** | **08 April 2025** |

| Name and mailing address of the ISA/KR | Authorized officer |
| --- | --- |
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
Information on patent family members

International application No.

**PCT/KR2025/000213**

| Patent document cited in search report | | | Publication date (day/month/year) | Patent family member(s) | | | Publication date (day/month/year) |
|---|---|---|---|---|---|---|---|
| KR | 10-1602605 | B1 | 21 March 2016 | CN | 106283307 | A | 04 January 2017 |
| | | | | CN | 106283307 | B | 24 April 2018 |
| | | | | EP | 3112185 | A1 | 04 January 2017 |
| | | | | EP | 3112185 | B1 | 09 May 2018 |
| | | | | JP | 2017-014678 | A | 19 January 2017 |
| | | | | JP | 6099798 | B2 | 22 March 2017 |
| | | | | US | 10196765 | B2 | 05 February 2019 |
| | | | | US | 2016-0376733 | A1 | 29 December 2016 |
| | | | | US | 2017-0106698 | A1 | 20 April 2017 |
| | | | | US | 9617663 | B2 | 11 April 2017 |
| | | | | WO | 2017-003169 | A1 | 05 January 2017 |
| KR | 10-2014-0090307 | A | 17 July 2014 | CN | 104919099 | A | 16 September 2015 |
| | | | | EP | 2938765 | A1 | 04 November 2015 |
| | | | | JP | 2016-506453 | A | 03 March 2016 |
| | | | | JP | 2018-071036 | A | 10 May 2018 |
| | | | | JP | 6704730 | B2 | 03 June 2020 |
| | | | | KR | 10-1580352 | B1 | 23 December 2015 |
| | | | | US | 2015-0292124 | A1 | 15 October 2015 |
| | | | | US | 9789731 | B2 | 17 October 2017 |
| | | | | WO | 2014-104680 | A1 | 03 July 2014 |
| KR | 10-2018-0063922 | A | 14 June 2018 | KR | 10-1878778 | B1 | 17 July 2018 |
| JP | 7477531 | B2 | 01 May 2024 | US | 2023-0030693 | A1 | 02 February 2023 |
| | | | | WO | 2021-124895 | A1 | 24 June 2021 |
| KR | 10-2022-0149436 | A | 08 November 2022 | CN | 117043402 | A | 10 November 2023 |
| | | | | EP | 4276229 | A1 | 15 November 2023 |
| | | | | JP | 2024-511515 | A | 13 March 2024 |
| | | | | US | 2024-0076810 | A1 | 07 March 2024 |
| | | | | WO | 2022-231286 | A1 | 03 November 2022 |

Form PCT/ISA/210 (patent family annex) (July 2022)